# EUROPEAN PATENT APPLICATION

(11) **EP 2 248 421 A1**
(43) Date of publication of application: **10.11.2010**
(21) Application number: 09159625.4
(22) Date of filing: 07.05.2009
(51) Int. Cl.: A01N 43/08, A01N 43/12, A01N 65/00, A01P 21/00

(54) **Accumulation of biomass in plants**

(71) Applicant: GMI - Gregor-Mendel-Institut für Molekulare Pflanzenbiologie GmbH, 1030 Wien (AT)
(72) Inventor: Greb, Thomas, 1140 Vienna (AT); Agusti, Javier, 1030 Vienna (AT)
(74) Representative: Sonn & Partner Patentanwälte

(57) **Abstract**

The invention describes the use of strigolactones for promoting secondary growth of plants and, thereby, for accumulating biomass, for increasing shoot stability and transport capacity along growth axes.

## Description

The present invention relates to methods and compositions for promoting plant growth.

In addition to longitudinal growth, lateral expansion of growth axes is essential for land plants for creating extended shoot and root systems. Lateral or secondary growth is mediated by the activity of the cambium, a two-dimensional meristematic tissue, which is organised as a cylinder enclosing the centre of growth axes. Tissue formation by the cambium is mostly limited to vascular tissue which is essential to increase transport capacities and mechanical support of shoot and root systems. In contrast to the current understanding of molecular mechanisms controlling apical meristems and in spite of its essential role for many aspects of plant growth, knowledge of the molecular regulation of the cambium is very limited.

The vascular system in plants is the main long-distance transport system responsible for the distribution of assimilates, nutrients, water and signalling molecules, but also provides mechanical stability to the plant body. Therefore, beyond scientific aspects, the understanding of the molecular control of vascular development and, especially, the control of cambium activity, which is the origin of secondary vascular tissue, has implications for various aspects of crop production. This holds true especially considering anthropogenic changes in the global environment. For example, as vascular tissue provides mechanical support to plants, increased secondary growth has the potential to increase the resistance of annual crops to mechanical stresses such as wind and heavy rainfall. Furthermore, second generation biofuels are gained from whole plants and represent sustainable alternatives to burning fossils fuels. Lateral growth contributes significantly to the accumulation of biomass in perennial plants and an increase of cambial activity could make the usage of promising species even more efficient or could cause species on which there is currently no focus to become interesting for such applications.

Most importantly, wood formation in trees represents the most prominent result of secondary growth. Wood is not only a major source of energy but also provides material for building and many other products for which the mechanical properties and the aesthetics of this material are essential. In addition, developing wood cells represent one of the most important sinks for excess atmospheric CO₂, thereby reducing one of the major contributors to global warming.

Another aspect which is relevant in this connection is shoot architecture of crop species. During domestication, there has been a strong selection for plants with strong apical dominance, a trait which facilitates the harvesting process due to more synchronised fruit ripening and decreased assimilate transfer into side shoots.

Strigolactones are natural compounds extracted from root exudates of various plant species and were originally described as agents inducing the germination of seeds of parasitic plants of the groups Striga and Orobanche. These parasitic weeds are serious pests in many countries and are particularly harmful to some crops of major economic interest, such as crops of sorghum, maize, sugar cane, beans, etc.. Strigol was first identified in the false host cotton and later also in the Striga hosts maize, sorghum and millet. The structurally related alectrol was identified in cowpea, a host of S. gesneroides. Alectrol, orobanchol and a third unidentified germination stimulant have been isolated from root exudate of red clover. Strigolactones also enhance the seed germination of certain nonparasitic plants. Moreover, upon phosphate depletion, they function as root-derived signals causing elevated hyphal branching and spore germination of symbiotic mycorrhizal fungi, to enhance the uptake of soil nutrients. They are present in the root exudates of mono- and dicotyledonous plants (for example, rice and pea) and have additionally been detected in their shoots.

With strigolactones, it was possible to envisage suicide germination, a new approach in the struggle against parasitic plants (suicide germination consists in treating agricultural soils, which are likely to be infested with parasitic plants). Synthetic strigolactones, such as GR7 and GR24, are easier to obtain than the natural compounds and have therefore been regarded as being more suitable for application on an industrial scale. With synthetic strigolactones, the suicide germination treatment is carried out at a time when the plant to be cultivated is not yet growing in said soils. By disseminating said synthetic strigolactones, germination of the dormant seeds of the parasitic plants is induced and the parasitic plants, without a host plant to infest, ultimately die through lack of nutrition (US 2008/0318773 A1).

In US 2008/0318773 A1 strigolactones are used to stimulate the growth and/or development of arbuscular mycorrhizal fungi (AM fungi). This method is described as an advanced mycorrhization technique which is aimed at optimizing the production of fungic inoculum, and an improved use of AM fungi in soils or cultivation substrates. Administration of strigolactones is made for intensifying the symbiotic interaction between AM fungi and cultivated plants. In doing so, strigolactones (selected from GR24, GR7, Nijmegen-1, demethylsorgolactone, strigol, alectrol, sorgolactone, orobanchol and their structural analogs) are e.g. added to the cultivation medium (cultivation soil). An effect of strigolactones on the pants has not been described in US 2008/0318773 A1.

In DE 10 2005 048 904 A1 strigolactones from hops are applied for bioremediation of abandoned landfills and contaminated sites in soil for stimulating hyphae forming organisms, such as Mycorrhiza, which organisms then carry out the bioremediation.

In WO 2006/098626 A2, it is suggested to create crop species that do not induce germination of parasitic plant seeds anymore and therefore are resistant to parasitic plants by transforming plant cells with gene silencing vectors e.g. against enzymes involved in carotenoid catabolism to strigolyctone germination stimulants. Also recombinant trap and catch crops overproducing strigolactone are suggested.

More recently, it was reported that strigolactones inhibit shoot branching (Gomez-Roldan et al., Nature 455 (2008), 189-194; Umehara et al., Nature 455 (2008), 195-200). This effect was very specific and lead to the speculation that strigolactones may be used to specifically regulate shoot branching with minimal side effects and without the need for transgenic technology. In parallel, this also suggested that strigolactones may have a principal role in mediating the detection of nutrient availability by roots. It was even speculated that strigolactone levels are increased by plants in response to inorganic phosphate deficiency.

It is an object of the present invention to provide methods and compositions which are useful in agriculture, especially which are useful in promoting secondary (or lateral) growth of plant growth axes or in producing biomass.

Therefore, the present invention provides the use of strigolactones for promoting secondary growth of plants.

Quite surprisingly, it is shown with the present invention that strigolactones, for which up to now only a narrow spectrum of activity within plants was reported (among them the inhibition of shoot branching!), have a major role in triggering secondary growth in plants. By using this effect, the invention can specifically be used to enhance secondary growth in plants, preferably in cultured plants, especially in crop plants and to provide enhanced shoot stability and, generally, an accumulation of biomass. Moreover, it could also be shown that with the present invention an enhanced transport capacity in the plants along plant growth axes is safeguarded. All these effects may be obtained by direct application of strigolactones to the plants of interest. Accordingly, the present invention also relates to the use of strigolactones for enhancing shoot stability in plants and the use of strigolactones for increasing transport capacity in plants. The present invention therefore does not need the assistance of further organisms, such as (arbuscular) mycorrhizal fungi (as in US 2008/0318773 A). Specifically in view of the prior art, wherein strigolactones are only used indirectly with such fungi (as growth stimulants for these fungi), it was indeed surprising that administration of strigolactones directly to the plant of interest has the beneficial effects described herein, (specifically in view of the known effect of inhibition of shoot branching being connected to such direct application!).

Although the present invention may also be realised by enhancing the strigolactone production in plants by enhancing the internal production pathways in plants (for example by classical breeding programmes (extremely time consuming in crop plants !) or recombinant manipulation as in WO 2006/098626 A2 (with respect to strigolactone production)(various problems connected)), the present invention is preferably put into practice by the "pharmacological" approach, i.e. by administering strigolactones directly to the plants.

In the examples, the feasibility of the present invention is shown in an Arabidopsis model, which serves as a suitable model for other plants in general for which this invention is usable. Arabidopsis is also most suitable for addressing detailed scientific questions concerning the present invention (e.g. by using mutants with influence on the strigolactone pathway).

However, the present invention, of course, preferably provides its beneficial output in economically important plants, in which the enhancement of secondary growth by administration of strigolactones is used for agricultural improvement.

The use of strigolactones in field applications is also promising, because strigolactones are only involved in a small repertoire of (other) responses; their activity is generally regarded as being specific (in contrast to e.g. auxins). In addition, strigolactones are not toxic per se.

Since in monocots, stems rarely show secondary growth, dicots (wherein stems frequently have secondary growth) are preferred plants which are treated according to the present invention. Due to the economic importance of the wood-forming properties of the present invention, trees represent obvious targets for strigolactone application. Accordingly, trees, especially trees used for industrial wood production are preferred plants to be treated with strigolactones according to the present invention. Preferred tree types are: oak, chestnut, black locust, mulberry, osage-orange, sassafras, maple, ash, hickory, hackberry, beech, pine, buckeye, poplar, willow, catalpa, elm, walnut, mahogany, balsa, black ironwood, birch, eucalyptus, fir or alder.

In addition, a lack of shoot stability requires often attaching crop plants to mechanical support (e.g. tomato, grape, peas, ornamental flowers) or leads to a loss in yield due to mechanical influences (e.g. in rape seed by wind, heavy rain fall). The enhancement of secondary growth by strigolactone application according to the present invention leads to an increase in shoot stability making the manual attachment dispensable and reducing crop failures.

Another preferred group of plants according to the present invention are those which are used for fiber production from sprout axes, such as flax (Linum usitatissimum), jute (Corchorus capsularis and Corchorus olitorius), hemp (Canabis sativa) or ramie (Boehmeria nivea). In these or related plants, the present invention is used for enhancing the fiber production. Collected fibers usually originate from bast which is, in addition to wood, the second tissue produced by the vascular cambium.

Other preferred plants are those industrially used plants (vegetables) which are based on a (secondary) growth of shoot and root axes, such as kohlrabi (Brassica oleracea gongylodes), potato, carrot, sugar beet or garden beet.

On the other hand, the effect of the present invention can also be used for monocotyledonous plants e.g. for accumulation of biomass and to increase shoot stability. Secondary growth does not exist in most of monocotyledonous plants. However, some monocotyledonous species perform secondary growth which is based on the activity of a cambium-like tissue (e.g. Cordyline, Dracaena, Yucca). As strigolactone signal transduction is also present in monocots, strigolactone administration according to the present invention is also applicable in this case and induces secondary growth in species which do not perform this process under standard conditions. For example those, which are often subjected to damage by wind and rain, such as wheat and barley, Miscanthus or switchgrass, or which are harvested as whole plants to serve as animal feed or as sources of biofuels, such as maize and sugarcane, can be regarded as further preferred plants to be treated according to the present invention. Accordingly, a preferred embodiment of the present invention is drawn to the use of strigolactones for the accumulation of biomass in monocotyledonous plants, especially those with a cambium-like tissue.

The plants to be treated according to the present invention may preferably be plants without (arbuscular) mycorrhizal fungi in (symbiotic) connection therewith. In view of US 2008/0318773 A) the direct effects of strigolactones according to the present invention were not expectable from these teachings. On the other hand, the present invention can also be used in combination with the plants which use the symbiotic action of mycorrhizal fungi, e.g. by stimulating both, the fungi and the plants, the latter e.g. by specific administration to specific parts like stems, roots or leaves or to whole plants.

According to the present invention any strigolactone is applicable which has a proper biological activity of germination stimulation annotated to this class of compounds. Many naturally occurring strigolactones have a decreased stability, especially under basic conditions. For such strigolactones, proper stabilizers should be added when applied according to the present invention. On the other hand, many stable artificial strigolactones are known, which are preferably used according to the present invention. Specific examples have been termed "GR" (germination releaser) (Johnson et al., J. Chem. Soc. Perkin I 6 (1981), 1734). Proper bioassays are e.g. described in Mangnus et al. (J. Plant Growth Regul. 11 (1992), 91) or in Bergmann et al. (J. Plant Physiol. 142 (1993), 338, wherein a bioassay based on the concentration of half maximal stimulation of germination ("c_{1/2}") is described. Examples of preferred strigolactones to be used according to the present invention are strigol, strigyl acetate, orobanchol, orobanchyl acetate, 5-deoxystrigol, sorgolactone, alectrol, 3-[[(2,5-Dihydro-3-methyl-2-oxo-5-furanyl)oxy]methylene]-3,3a,6,6a-tetrahydrocyclopenta[b]furan-2-one (GR7), 3-[[(2,5-Dihydro-3-methyl-2-oxo-5-furanyl)oxy]methylene]-3,3a,4,8b-tetrahydroindeno[1,2-b]furan-2-one (GR24), Methyl 2-(1,3-Dioxo-1,3-dihydroisoindol-2-yl)-3-[4-methyl-5-oxo-2,5-dihydrofuran-2(R)-yloxy]acrylate (Nijmwegen 1), demethylsorgolactone, or mixtures thereof. Specifically mixtures of various stereoisomers are preferred, because in these mixtures, especially at higher concentrations, differences in activity between such stereoisomers are hidden, because all of them are active (Welzel et al., Chem. Commun. 1999 (1999), 2017).

Due to stability aspects, GR24, GR7 or Nijmwegen 1 (or other strigolactones with comparable stability and c_{1/2} in the same order of magnitude (10-1000%, 20-500%, 50-200%)) are specifically preferred strigolactones according to the present invention. These preferred embodiments are also characterised by being producible in an economically feasible manner.

Of course, also other strigolactones are applicable which share the particular structure and configuration of the rings denoted B, C and D of the strigol molecule (see US 2008/0318773). Accordingly, any compound having a structure analogous to GR7, GR24 and other strigolactones explicitly mentioned herein, that is to say any compound having the structure of the chain of rings denoted B, C and D of strigolactones and an appropriate biological strigolactone activity can be used according to the present invention. Preferably, the strigolactones to be used according to the present invention have at least a biological activity of 10% of GR24, preferably a biological activity of 50 to 200% of GR24 (the biological activity being determined according to the method of Mangnus (1992)).

Preferred embodiments for administering strigolactones to plants according to the present invention are
- spraying a strigolactone containing solution or suspension onto the plants;
- bringing a strigolactone containing carrier into contact with the plants; and
- watering the plants with a strigolactone containing solution or suspension.

These methods may be applied exclusively or in simultaneous or subsequent combination with each other and be combined with other methods for plant breeding, growth and production suitable for the specific plant.

The strigolactones are applied in a concentration wherein the compounds are effective in enhancing lateral growth. This can easily adapted based on the activity tests known to the skilled person in the art and the biological activity compared to the biological activity already reported. Administration of strigolactones may be carried out by any suitable method for providing plant growth aiding substances to plants, such as applying the strigolactones as a strigolactone containing solution or suspension (e.g. by spraying or humidifying) or with assistance of a carrier material (e.g. paraffin, lanolin or similar substances or a sponge or sponge-like structure containing strigolactones which can be released to the plants). The strigolactones can be directly applied at the location on the plant where the effect should be obtained (e.g. at the stem, at the leaves, at the root or at the sprout) or can be applied as a growth solution or suspension via the roots. The treatment according to the present invention may be carried out once (with a higher concentration of strigolactones) or more than once (e.g. once in a day or once in a week over a longer period (e.g. over 2 to 10 weeks or 3 to 12 months); with a lower concentration). In many cases, the strigolactone administration according to the present invention is sufficient in an early stage of life of a plant (i.e. before the plant is grown in industrial (natural) soil on the field), because induction of an enhanced secondary growth is already initiated by an early treatment. For example, the plants may be cultured first in the laboratory incubator or greenhouse using strigolactone-containing nutrient bases (solutions, suspensions or soil) and then be planted on the field without further strigolactone administration (or only with a sponge material soaked with strigolactones on the stems). Strigolactone administration via carrier substances can be performed e.g. on a weekly or monthly basis by exchanging the previous (already drained) strigolactone containing carrier by a new one.

Typical administration concentrations of the strigolactones according to the present invention are - on the basis of GR24 and therefore on its specific biological activity - from 1 nM to 1 mM, preferably 10 nM to 100 microM, especially 100 mM to 10 microM, GR24 for nutrient solutions. If directly applied via a carrier, suitable concentrations of strigolactones may be - again based on a GR24 basis - 10 ng to 10 mg, preferably 100 ng to 1 mg, especially 1 to 100 microg, strigolactone per mg of carrier. Concentration of other strigolactones may be calculated on the basis of these concentration ranges weighed with the specific germination activity of the other strigolactone to be applied in comparison with GR24. Strigolactone concentrates may be used for preparing these nutrient solutions e.g. by mixing the strigolactone concentrated with typical plant growth media. Strigolactone containing concentrates for stimulating lateral growth or accumulating biomass is therefore another aspect of the present invention. These may be concentrated by the factor 2 to 1000, preferably 10 to 100, compared to the planned concentration to be used at the plant (e.g. in a spray suspension or a nutrient solution).

According to another aspect, the present invention relates to an apparatus for spraying a liquid onto plants comprising a spraying device and a container for the liquid, **characterised in that** the liquid is a strigolactone containing liquid, especially a strigolactone solution or suspension. The strigolactones may be formulated for the present invention as liquid formulations or formulations intended to constitute liquid compositions when applied. Typically, strigolactone solutions are provided, in particular water-soluble concentrates, emulsifiable concentrates, emulsions, concentrated suspensions and wettable powders (or powders for spraying). The wettable powders (or powders for spraying) are usually prepared such that they contain 20% to 95% of active materials, and they usually contain, in addition to the solid support, from 0% to 30% of a wetting agent, from 3% to 20% of a dispersant and, when necessary, from 0.1% to 10% of one or more stabilizers and/or other additives, such as penetration agents, adhesives, anticaking agents, dyes, etc.. As spraying device, any device applicable in plant technology is suitable. In practice, the device will be chosen according to the specific needs and scales of spraying. The spraying devices can be as simple as manually operated vaporisers, of course, also more sophisticated devices can be applied, such as automatic sprays driven by external pressure generators (electric or hydraulic pumps or combustion engines, etc.).

According to another aspect, the present invention relates to a carrier material applicable on plants for releasing active compounds to plants comprising a carrier whereto the active compound is adsorbed and an active compound, **characterised in that** the carrier is a strigolactone adsorbing material and that the active compound is a strigolactone. The carrier material may be a solid carrier, such as a sponge or textile fabric or a porous synthetic material wherein the strigolactones are adsorbed in the cavities of the sponge, fabric or material. Examples for other carrier materials are organic carriers, such as waxes, linolin, paraffin, dextrose granules, sucrose granules and maltose-dextrose granules. Examples for anorganic carriers are natural clays, kaolin, pyrophyllite, bentonite, alumina, mont-morillonite, kieselguhr, chalk, diatomaceous earths, calcium phosphates, calcium and magnesium carbonates, sulphur, lime, flours or talc. The carrier material itself does not have any significant effect on the plant but enables the release of the active substance to the plant surface so that the active substance may be taken up by the plant.

According to another embodiment, the present invention relates to the use of a strigolactone containing culture medium for culturing plants or plant cells for promoting secondary growth, accumulation of biomass, enhancing shoot stability and/or increasing transport capacity in plants or plant cells. Although strigolactone containing culture media for culturing plants or plant cells as such are known from the prior art, especially for determining the ability of strigolactones to stimulate germination (e.g. Mangnus et al., 1992), the use of such media for the above mentioned purposes is a novel and surprising new application for such media.

The present invention is further described in the following examples and the drawing figures, yet without being limited thereto.

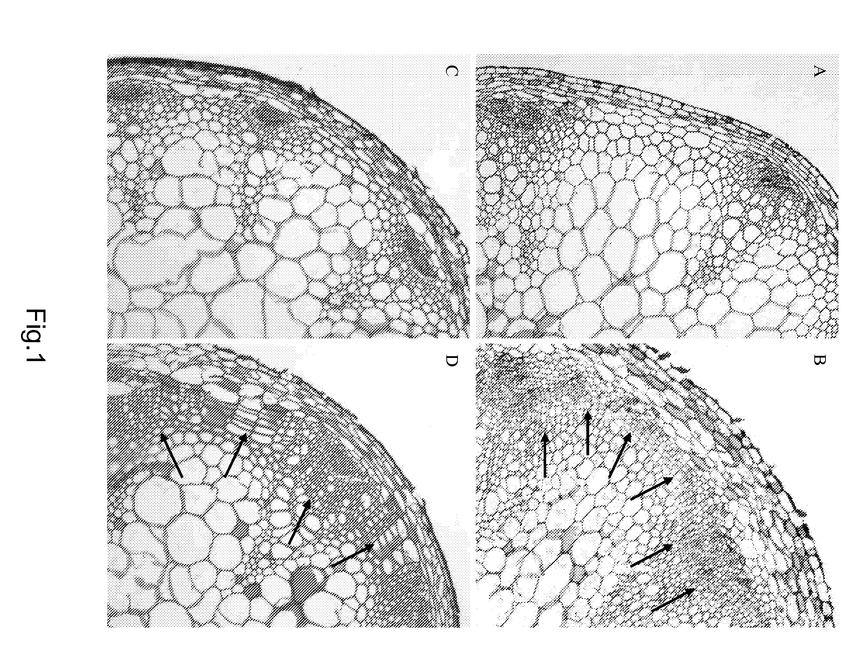

Fig.1 shows that max1-1 mutants (A) do not show secondary growth initiation in the stem as wild-type plants (B) do. Arrows: cambial zone in wild type; a comparison of max1 plants which were mock-treated (C) or treated locally with strigolactones (D) shows that fascicular and interfascicular cambial activity can be induced by strigolactone treatment (arrows).

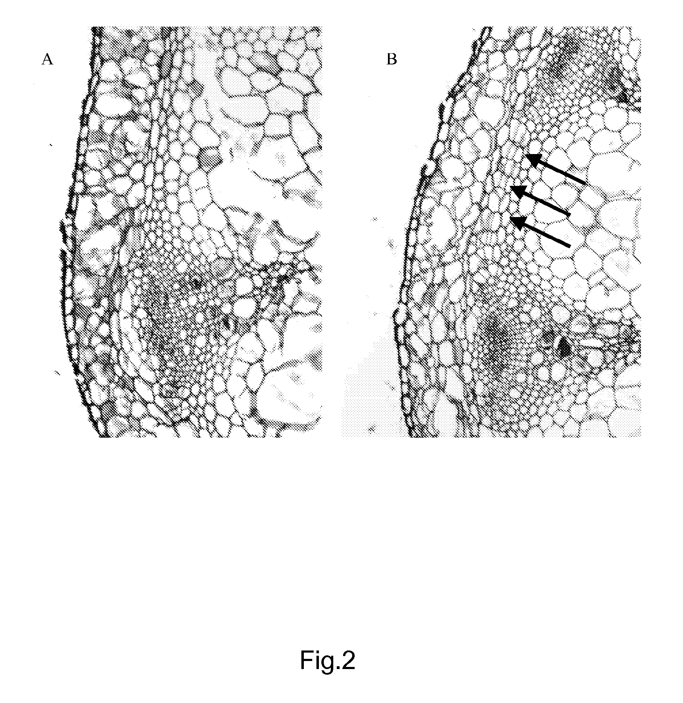

Fig.2 shows the effect of strigolactone treatment on isolated stem fragments. Isolated Arabidopsis stem fragments were incubated in the split-plate system on standard growth medium without (A) and in the presence of GR24 (1 µg/ml, B) as the only additional hormone. Arrows in B indicate the cells which originated from cambial activity in interfascicular regions and which are not present in untreated stems. Incubation time was 7 days.

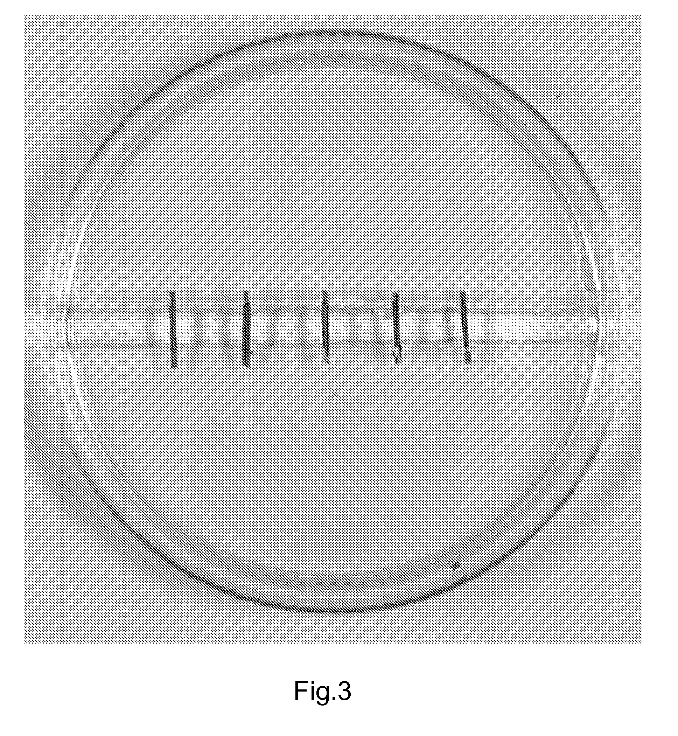

Fig.3 shows an experimental setup to analyse secondary growth in vitro. By removing a strip in the middle of the plate two media halves are separated which allows the application of substances solely on the apical end or the basal end of the stem fragment.

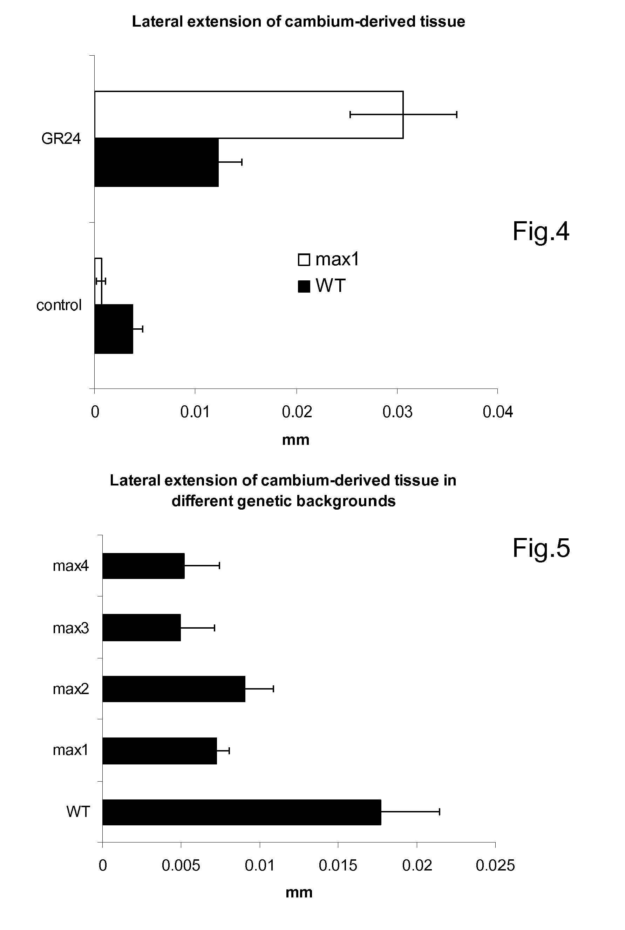

Fig.4 shows the quantitative analysis of the effect of local GR24 treatment in Arabidopsis wild-type and max1-1 stems. The lateral extension of the cambium and the cambium-derived tissue was measured together in cross-sections as shown in Fig. 1;

Fig.5 shows the quantitative analysis of the extension of the cambium-derived zone in different genetic backgrounds affected in strigolactone biosynthesis (max1, max3, max4) or perception (max2). 25 cm high plants were analyzed 3 mm above the last rosette leaf. The lateral extension of the cambium and the cambium-derived tissue was measured together in cross-sections as shown in Fig. 1.

### Examples:

Strigolactones in Arabidopsis thaliana are synthesised and perceived by a pathway which was described to consist of four genes, MAX1, MAX2, MAX3 and MAX4.

In wild-type plants, secondary growth is observed in the elongating shoot, almost exclusively at the very base (in a region of ∼0.5 cm above the rosette; Fig. 1B). In contrast, all four max mutants (max1 - max4) are nearly devoid of secondary growth (Fig. 1A, 4). Local applications of strigolactones mixed with lanolin directly on stems induces secondary growth in wild-type and max1 mutants even when it is applied when side shoots have grown out already (Fig. 1D, GR24, 10 µg/mg, 16 days treatment, results shown for max1). This shows that strigolactones can be used as agents to positively influence secondary growth and that side shoot development and secondary growth can be separated experimentally.

### Methodological approaches

In an attempt to specifically address the role of different factors in the initiation of secondary growth, an inducible in vitro system was established. Adapting an experimental setup described before (Chatfield et al., Plant J. 24(2000), 159), internodal stem fragments were incubated in a split-plate system (Fig. 2) and by applying auxin exclusively apically, it was possible to induce fascicular and interfascicular secondary growth in these fragments. On plates without auxin or on plates with auxin but in addition with the auxin transport inhibitor NPA, no secondary growth is observed. Interestingly, on plates where auxin is only applied in the basal half, no secondary growth was induced, suggesting that stem polarity is maintained and that the situation in intact plants is recapitulated by the present system. In summary, these analyses show that a system was developed that allows the induction of secondary growth in Arabidopsis stems in a highly specific and controlled manner. Incubation of stem fragments with the addition of GR24 (1 µg/ml) for 7 days induced secondary growth (Fig. 5) and shows that also strigolactone application via growth media has a positive effect on secondary growth.

### Materials and Methods

Arabidopsis thaliana (L.) Heynh. plants of the accession Columbia were used for all experiments. wild type and max1-1, max2-1, max3-9, and max4-1 mutants (Booker et al., Dev. Cell 8 (2005), 443-449); Stirnberg et al., Plant J. 50 (2007), 80-94; Booker et al., Curr. Biol. 14 (2004), 1232-1238; Sorefan et al., Genes Dev. 17 (2003), 1469-1474) were used for all experiments. Plants were grown under standard growth conditions first for 3 weeks in short day conditions (8 h light, 16 h dark) and then shifted to long day conditions (16 h light, 8 h dark) to induce flowering. For histological analyses, stem fragments were fixed in EtOH:acetic acid (3:1) and embedded in paraffin. Subsequently, 10 µm sections were made using a microtome, stained with toluidine blue (AppliChem) and fixed with Entellan (Merck) on microscope slides. For quantitative analyses, at least 5 plants were evaluated for each data point. The standard error of means was used to visualise variation. For pharmacological treatments, lanolin alone (negative control) or mixed with GR24 (10 µg GR24/mg lanolin) was applied directly on stems of 15 cm high plants covering a stem segment of 0.3 cm in a region where under standard conditions no secondary growth is established. After 16 days of incubation, histological analyses using light microscopy were performed.

Other experimental approaches include the analysis of gene expression by Real Time RTPCR, the histochemical analysis of GUS lines and confocal microscopy of GFP reporter lines. Tissue-specific inducible expression of genes is achieved by taking advantage of the ethanol-inducible system in which a tissue-specific promoter drives the expression of the AlcR protein, an ethanol-dependent transcriptional activator controlling the expression of genes cloned downstream of the AlcA promoter (Deveaux et al., Plant J. 36 (2003), 918; Roslan et al., Plant J. 28 (2001), 225). An Affymetrix micro array service is used to perform transcriptional profiling of MAX2-inducible lines and for initial data analysis.

## Claims

1. Use of strigolactones for promoting secondary growth of plants.

2. Use of strigolactones for accumulation of biomass in plants.

3. Use of strigolactones for enhancing shoot stability in plants.

4. Use of strigolactones for increasing transport capacity in plants.

5. Use according to any one of claims 1 to 4, **characterised in that** the strigolactones are strigol, strigyl acetate, orobanchol, orobanchyl acetate, 5-deoxystrigol, sorgolactone, alectrol, 3-[[(2,5-Dihydro-3-methyl-2-oxo-5-furanyl)oxy]methylene]-3,3a,6,6a-tetrahydrocyclopenta[b]furan-2-one (GR7), 3-[[(2,5-Dihydro-3-methyl-2-oxo-5-furanyl)oxy]methylene]-3,3a,4,8b-tetrahydroindeno[1,2-b]furan-2-one (GR24), Methyl 2-(1,3-Dioxo-1,3-dihydroisoindol-2-yl)-3-[4-methyl-5-oxo-2,5-dihydrofuran-2(R)-yloxy]acrylate (Nijmwegen 1), demethylsorgolactone, or mixtures thereof.

6. Use according to any one of claims 1 to 5 **characterised in that** the plants are trees, especially oak, chestnut, black locust, mulberry, osage-orange, sassafras, maple, ash, hickory, hackberry, beech, pine, buckeye, poplar, willow, catalpa, elm, walnut, mahogany, balsa, black ironwood, birch, eucalyptus, fir or alder.

7. Use according to any one of claims 1 to 6 **characterised in that** the plants are flax (Linum usitatissimum), jute (Corchorus capsularis and Corchorus olitorius), hemp (Canabis sativa) or ramie (Boehmeria nivea).

8. Use according to any one of claims 1 to 7 **characterised in that** the plants are kohlrabi, potato, carrot, sugar beet or garden beet.

9. Use according to any one of claims 1 to 8 **characterised in that** the plants are wheat, barley, Miscanthus, switchgrass, maize, sugarcane, rape seed, tomato, peas, grape or ornamental flowers.

10. Use according to any one of claims 1 to 9 **characterised in that** the strigolactones are administered to plants by spraying a strigolactone containing solution or suspension onto the plants.

11. Use according to any one of claims 1 to 10 **characterised in that** the strigolactones are administered to plants by bringing a strigolactone containing carrier into contact with the plants.

12. Use according to any one of claims 1 to 11 **characterised in that** the strigolactones are administered to plants by watering the plants with a strigolactone containing solution or suspension.

13. Apparatus for spraying a liquid onto plants comprising a spraying device and a container for the liquid, **characterised in that** the liquid is a strigolactone containing liquid, especially a strigolactone containing solution or suspension.

14. Carrier material applicable on plants for releasing active compounds to plants comprising a carrier whereto the active compound is adsorbed and an active compound, **characterised in that** the carrier is a strigolactone adsorbing material and that the active compound is a strigolactone.

15. Use of a strigolactone containing culture medium for culturing plants or plant cells for promoting secondary growth, accumulation of biomass, enhancing shoot stability and/or increasing transport capacity in the plants or plant cells.
